Europäisches Patentamt

European Patent Office

Office européen des brevets

(19)

(11) Numéro de publication: **0 385 523**
**A1**

# (12) DEMANDE DE BREVET EUROPEEN

(21) Numéro de dépôt: **90200292.2**

(22) Date de dépôt: **09.02.90**

(51) Int. Cl.⁵: **C08G 61/12, C08L 65/00,**
**//(C08L65/00,27:06),**
**(C08L65/00,23:04)**

(30) Priorité: **20.02.89 FR 8902267**
**17.11.89 BE 8901231**

(43) Date de publication de la demande:
**05.09.90 Bulletin 90/36**

(84) Etats contractants désignés:
**AT BE CH DE DK ES FR GB GR IT LI LU NL SE**

(71) Demandeur: **SOLVAY & Cie (Société**
**Anonyme)**
**Rue du Prince Albert, 33**
**B-1050 Bruxelles(BE)**

(72) Inventeur: **Hannecart, Etienne**
**Arboretumlaan 38**
**B-1980 Tervuren(BE)**
Inventeur: **Franquinet, Claude**
**Rue du Bon Pasteur 51**
**B-1140 Bruxelles(BE)**
Inventeur: **Destryker, Elise**
**Jasmijnlaan 11**
**B-1600 Sint-Pieters-Leeuw(BE)**

(74) Mandataire: **Nichels, William et al**
**Solvay & Cie Département de la Propriété**
**Industrielle Rue de Ransbeek, 310**
**B-1120 Bruxelles(BE)**

(54) **Procédé pour la préparation de polymères électroconducteurs dérivés de 3-alkylthiophènes et dispositifs électroconducteurs les contenant.**

㉗ L'invention concerne un procédé pour la préparation de polymères conducteurs d'électricité dérivés de 3-alkylthiophènes par polymérisation chimique du 3-alkylthiophène au moyen d'un sel ferrique, d'un halogénure d'alkyle et de l'eau.

L'invention concerne également les dispositifs électroconducteurs contenant les poly(3-alkylthiophènes) obtenus et un polymère thermoplastique.

EP 0 385 523 A1

# Procédé pour la préparation de polymères électroconducteurs dérivés de 3-alkylthiophènes et dispositifs électroconducteurs les contenant

La présente invention concerne un procédé pour la préparation de polymères conducteurs d'électricité dérivés de 3-alkylthiophènes par polymérisation chimique du 3-alkylthiophène correspondant.

On a proposé dans la demande de brevet EP-0 253 594 un procédé de préparation de polymères conducteurs d'électricité par polymérisation chimique de thiophènes pouvant être substitués, par divers groupements aminoalkyles ou oxyalkyles substitués, en présence d'un oxydant ayant un potentiel redox standard supérieur ou égal à celui du thiophène substitué et éventuellement en présence d'un catalyseur et d'un solvant à une température comprise entre 20 et 110°C. Les polymères obtenus peuvent être mélangés avec d'autres polymères tels que le chlorure de polyvinyle et le polyéthylene mais les polymères conducteurs et les mélanges obtenus par ce procédé ont des conductivités faibles (de l'ordre de 1 à $10^{-6}$ S.cm$^{-1}$).

On a maintenant trouvé un procédé pour la préparation de poly(3-alkylthiophènes), par polymérisation chimique du 3-alkylthiophène correspondant, permettant d'obtenir avec un taux de conversion élevé de grandes quantités de polymères conducteurs homogènes, ayant des propriétés de conductivité électrique élevée et thermiquement stables. Les poly 3-alkylthiophènes ainsi obtenus peuvent être mis en oeuvre aisément. En outre, après mise en oeuvre de mélanges du poly 3-alkylthiophène obtenu selon le procédé de l'invention et de résines telles que le chlorure de polyvinyle ou le polyéthylene, les composites obtenus présentent une bonne dispersion et une résistance mécanique et thermique satisfaisante, ce qui n'a pas pu être obtenu avec les polymères de (3-alkyl)thiophènes connus.

A cet effet, la présente invention concerne un procédé pour la préparation de polymères conducteurs d'électricité dérivés de 3-alkylthiophènes par polymérisation chimique du 3-alkylthiophène correspondant dans un milieu réactionnel comprenant un sel ferrique, un halogénure d'alkyle et de l'eau.

Par polymères conducteurs d'électricité dérivés de 3-alkylthiophènes, également appelés poly(3-alkylthiophènes), on entend des polymères contenant des unités récurrentes dérivées de 3-alkylthiophène dont le substituant alkyle comprend de six à neuf atomes de carbone et des copolymères contenant des unités de thiophène et des unités dérivées de 3-alkylthiophène dont le substituant alkyle comprend de six à neuf atomes de carbone. Habituellement, dans le cas des copolymères, la quantité d'unités de thiophène non substitué est inférieure à 50 % et, de préférence, inférieure à 30 % des unités polymériques totales. Le substituant alkyle peut être choisi parmi les radicaux alkyles, linéaires ou ramifiés, de C$_6$ à C$_9$. De préférence on met en oeuvre des polymères contenant des unités récurrentes de 3-n-octylthiophène.

Dans le procédé selon l'invention, le mélange réactionnel peut, du fait de la présence de l'eau, être constitué d'une phase homogène ou de plusieurs phases distinctes. On préfère travailler avec un mélange réactionnel constitué d'une phase la plus homogène possible.

Dans le milieu réactionnel, on met en oeuvre un sel ferrique comme agent dopant et provoquant la polymérisation. Généralement, on utilise un sel ferrique organique ou inorganique. Habituellement, on met en oeuvre un sel ferrique inorganique tel qu'un chlorure, un sulfate ou un nitrate. De manière préférée, on met en oeuvre le chlorure ferrique. Le sel ferrique peut être introduit sous forme anhydre ou hydratée, l'eau apportée par le sel ferrique hydraté fait partie du milieu réactionnel et est prise en compte pour calculer les rapports avec les autres additifs.

Dans le milieu réactionnel, on met généralement en oeuvre un halogénure d'alkyle comprenant de 1 à 10 atomes de carbone. Habituellement, on met en oeuvre un halogénure d'alkyle linéaire ou ramifié contenant de 1 à 8 atomes de carbone, l'halogénure étant un chlorure ou un fluorure. De préférence, on met en oeuvre un chlorure d'alkyle linéaire contenant de 1 à 4 atomes de carbone. De manière particulièrement préférée, on met en oeuvre le chloroforme ou le chlorure de méthylène.

La quantité d'halogénure d'alkyle mis en oeuvre dans le procédé selon l'invention est généralement compris entre 0,001 et 1 litre par g de 3-alkylthiophène, habituellement entre 0,002 et 0,8 litre par g de 3-alkylthiophène et de préférence entre 0,003 et 0,5 litre par g de 3-alkylthiophène.

Le rapport molaire entre le sel ferrique et le 3-alkylthiophène mis en oeuvre dans le procédé selon l'invention est généralement compris entre 1 et 25. Habituellement, ce rapport est compris entre 5 et 20 et de préférence entre 10 et 15.

La quantité d'eau dans le procédé selon l'invention est importante et est généralement comprise entre 0,002 et 900 % en poids d'halogénure d'alkyle, habituellement entre 0,01 et 500 % et de préférence entre 0,1 et 250 % en poids d'halogénure d'alkyle.

Le rapport molaire entre l'eau et le sel ferrique est une caractéristique importante pour l'invention. Ce rapport est généralement compris entre 0,01 et 6, habituellement entre 0,1 et 5 et de préférence entre 0,3 et 4.

La réaction de polymérisation chimique est habituellement conduite sous atmosphère d'air ou d'azote et, de préférence, sous atmosphère d'azote.

La pression à laquelle est réalisé le procédé est généralement comprise entre 0,1 et 10 bar et de préférence elle est égale à la pression atmosphérique.

La température à laquelle est réalisé le procédé de polymérisation est critique pour le bon déroulement du procédé selon l'invention et est généralement comprise entre $0°$ et $15°C$, habituellement entre $1°$ et $12°C$ et de préférence entre $2°$ et $10°C$ lorsqu'on opère à pression atmosphérique.

Le procédé selon l'invention peut avantageusement être réalisé en suivant les étapes suivantes :

- lors d'une première étape, on introduit dans le réacteur sous atmosphère d'azote une fraction de la quantité nécessaire d'halogénure d'alkyle et le sel ferrique ;
- lors d'une deuxième étape, on ajoute sous agitation, séparément, la quantité d'eau appropriée et le 3-alkylthiophène dissous dans la quantité nécessaire d'halogénure d'alkyle, avec obtention du polymère souhaité ;
- lors d'une troisième étape, le polymère obtenu est lavé, puis séché.

Lors de la deuxième étape, il est particulièrement avantageux d'introduire l'eau et le 3-alkylthiophène dissous dans l'halogénure d'alkyle de façon continue et régulière.

Lors de la troisième étape, le polymère obtenu est de préférence lavé avec de l'acétonitrile.

Le procédé selon l'invention peut être réalisé dans tout appareillage ou tout réacteur permettant de réunir les conditions opératoires décrites ci-avant.

Les poly(3-alkylthiophènes) obtenus selon le procédé de l'invention peuvent être aisément dispersés dans des résines polymériques diverses et mis en oeuvre facilement. En effet, les polymères selon l'invention et leurs mélanges avec des polymères thermoplastiques tels que le chlorure de polyvinyle, le polyéthylène ou le copolymère d'éthylène et d'acétate de vinyle, peuvent être malaxés et pressés à chaud pour obtenir des plaques ou objets composites. Ces plaques ou objets composites présentent une bonne résistance mécanique et thermochimique. Ils possèdent, contrairement aux objets composites réalisés avec des polymères conducteurs obtenus par voie électrochimique, une conductivité électrique résiduaire élevée et stable dans le temps. Ces plaques ou objets composites sont homogènes, car les poly(3-alkylthiophènes) peuvent être malaxés et mélangés à chaud sans perte de conductivité électrique.

Contrairement à ce qui est observé avec les polymères du thiophène, obtenus par les procédés connus, qui perdent leur conductivité électrique et doivent être redopés après pressage à chaud ou/et mélange, le malaxage des poly (3-alkylthiophènes) obtenus selon le procédé de l'invention n'engendre aucune diminution de la conductivité électrique mais, au contraire, provoque une tendance à exalter cette propriété.

Les plaques ou objets composites peuvent être chargés notamment par des fibres de verre, du noir de carbone, du carbonate de calcium ou des particules métalliques.

L'invention concerne donc également des compositions comprenant les poly(3-alkylthiophènes) et un ou plusieurs polymères thermoplastiques, ainsi que les dispositifs électroconducteurs comprenant ces compositions.

Les poly(3-alkylthiophènes) obtenus selon le procédé de l'invention peuvent être mis en solution dans un solvant organique.

Des exemples de solvants utilisables sont le chlorobenzène, l'acétone et le nitrobenzène. On utilise de préférence le nitrobenzène.

La solution ainsi obtenue, chauffée, peut être étalée sur de nombreux supports, tels que le verre, les métaux, les verres métallisés, le polyester, les fibres de verre, les textiles, les matières plastiques. On obtient ainsi des couches minces de quelques microns (de 0,2 à quelques dizaines de microns), régulières, homogènes et conductrices, adhérentes sur ces supports.

Enfin, les poly(3-alkylthiophènes) et les compositions comprenant des poly(3-alkylthiophènes) obtenus selon le procédé de l'invention peuvent être utilisés pour leurs propriétés de conductivité électrique, d'absorption électromagnétique et de conductivité thermique et, plus particulièrement, pour la réalisation de dispositifs électroconducteurs.

L'invention est illustrée par les exemples suivants.

Exemple 1

Comme réacteur, on utilise un ballon de 3 l à 5 cols, munis, respectivement, d'un robinet à 3 voies, d'un thermomètre, d'un réservoir à robinet de 250 ml surmonté d'un robinet à 3 voies, d'un septum permettant de planter une aiguille reliée à une seringue doseuse de 50 ml et d'un agitateur.

Ce ballon équipé d'un agitateur est placé dans un bain thermostatique et est purgé par un cycle de 3 vides et 2 rinçages à l'azote pur et sec.

Dans ce ballon maintenu à 5°C sous azote, on introduit ensuite 850 ml de chloroforme préalablement dégazé à l'azote, puis sous agitation on ajoute 94 g de chlorure ferrique anhydre.

Ensuite, on remplit la seringue doseuse avec 20 ml d'eau déminéralisée et dégazée, puis le réservoir à robinet avec 150 ml de chloroforme et 11 g de 3-n-octylthiophène distillé et dégazé.

On introduit en parallèle et en 10 minutes dans le ballon l'eau à l'aide de la seringue, le chloroforme et le 3-n-octylthiophène à l'aide du réservoir à robinet.

Le ballon est ensuite encore maintenu sous agitation à 5°C pendant deux heures, après quoi on introduit 150 ml d'acétonitrile très lentement durant 45 minutes dans ce ballon maintenu à 5°C.

Puis, on agite durant 10 minutes.

Le produit est ensuite filtré à l'air à 20°C.

Le produit obtenu est lavé 3 fois avec 250 ml d'acétonitrile à 20°C, puis séché sous vide dynamique à 20°C.

On obtient finalement 12 g de poly(3-n-octylthiophène) dopé qui présente une conductivité de 25 S.cm$^{-1}$ et avec un taux de conversion :

$$\left[\frac{\text{polymère (poly)octylthiophène calculé comme non dopé}}{\text{monomère 3-n-octylthiophène}}\right] \text{ de } 80,5\ \%$$

Exemple 2

1 g de chlorure de polyvinyle (PVC vendu sous la dénomination SOLVIC 271 GB nombre K71) est mélangé avec 9 g de poly(3-n-octylthiophène) tel qu'obtenu à l'exemple 1.

Le mélange est malaxé à 180°C durant 2,5 minutes, puis pressé à 180°C durant 1 minute sous une pression d'une tonne par cm². 

La plaquette obtenue a une conductivité de 42 S.cm$^{-1}$.

Exemple 3

10 g de poly(3-n-octylthiophène), tel qu'obtenu à l'exemple 1, sont malaxés à 180°C durant 2,5 minutes, puis pressés à 180°C durant 1 minute sous une pression d'une tonne par cm². 

La plaquette obtenue a une conductivité de 40 S.cm$^{-1}$.

Exemple 4

On répète l'exemple 2, en mettant en oeuvre 2 g de chlorure de polyvinyle et 8 g de poly(3-n-octylthiophène) tel qu'obtenu à l'exemple 1.

La plaquette obtenue a une conductivité de 29 S.cm$^{-1}$.

Exemple 5

Dans un ballon équipé d'un agitateur placé dans un bain thermostatique, maintenu sous azote et muni d'un réfrigérant, on introduit 10 g de poly(3-n-octylthiophène) tel qu'obtenu à l'exemple 1 et 1 l. de nitrobenzène ppa.

On chauffe le mélange à 140°C pendant une heure.

On centrifuge la solution chaude à 10.000 tours par minute pendant 3 minutes.

On prélève le surnageant sous azote, puis on laisse reposer la solution pendant 4 heures à température ambiante.

EP 0 385 523 A1

Le produit obtenu est étalé sur du verre et sur du polyester à l'aide d'une racle, puis séché dans une étuve à vide (20 mm Hg, 50°C, 30 minutes).

Les caractéristiques des films obtenus sont rassemblées au tableau 1.

Tableau 1

| Support | Epaisseur μm | Conductivité S.cm⁻¹ | Adhérence (*) |
|---|---|---|---|
| Polyester | 1,1 | 50 | A3 |
| verre | 1,0 | 60 | A1 |

(*) L'adhérence est mesurée suivant la norme ASTM D 3359-78 A qui met en oeuvre un test au Scotch tape 3M n° 710 (American National Standard).

## Exemple 6R (de comparaison)

On utilise un réacteur semblable à celui utilisé à l'exemple 1.

Dans ce ballon maintenu à 5°C sous azote, on introduit 850 ml de chloroforme anhydre préalablement dégazé à l'azote, puis sous agitation on ajoute 94 g de chlorure ferrique anhydre.

Ensuite, on introduit dans le ballon 150 ml de chloroforme et 11 g de 3-n-octylthiophène distillé et dégazé.

Le ballon est ensuite maintenu sous agitation à 5°C pendant deux heures. Puis, on introduit 150 ml d'acétonitrile très lentement durant 45 minutes dans ce ballon maintenu à 5°C.

Puis, on agite durant 10 minutes.

Le produit est ensuite filtré à l'air à 20°C.

Le produit obtenu est lavé 3 fois avec 250 ml d'acétonitrile à 20°C, puis séché sous vide dynamique à 20°C.

On obtient finalement 10,9 g de poly(3-n-octylthiophène) dopé qui présente une conductivité électrique de 5 S.cm⁻¹.

## Exemple 7

Comme réacteur, on utilise un ballon de 3 l à 5 cols, munis, respectivement, d'un robinet à 3 voies, d'un thermomètre, d'un septum permettant de planter des aiguilles reliées à des pompes doseuses et d'un agitateur.

Ce ballon équipé d'un agitateur est placé dans un bain thermostatique et est purgé par un cycle de 3 vides et 2 rinçages à l'azote pur et sec.

Dans ce ballon maintenu à 5°C sous azote, on introduit ensuite 750 ml de chloroforme préalablement dégazé à l'azote, puis sous agitation on ajoute 750 g de chlorure ferrique anhydre.

Ensuite, on remplit sous azote un récipient de 500 ml avec 250 ml de chloroforme et 92 g de 3-n-octylthiophène distillé et dégazé.

On introduit en parallèle à l'aide des pompes doseuses dans le ballon 160 ml d'eau en 5 minutes et le chloroforme et le 3-n-octylthiophène, contenus dans le récipient, en 10 minutes.

Le ballon est ensuite encore maintenu sous agitation à 5°C pendant deux heures, après quoi on introduit 1 l d'acétonitrile très lentement durant 80 minutes dans ce ballon maintenu à 5°C.

Le produit est ensuite filtré à 20°C sous azote.

Le produit obtenu est lavé 5 fois avec 500 ml d'acétonitrile à 20°C, puis séché sous vice dynamique à 20°C.

On obtient finalement 99 g de poly(3-n-octylthiophène) dopé qui présente une conductivité de 37 S.cm⁻¹ et avec un taux de conversion :

5

$$\left[\frac{\text{polymère (poly)octylthiophène calculé comme non dopé}}{\text{monomère 3-n-octylthiophène}}\right] \text{ de 80 \%}$$

Exemple 8R (de comparaison)

On répète l'exemple 8, mais sans introduire d'eau.

On obtient 65 g de poly(3-n-octylthiophène) dopé qui présente une conductivité de 0,2 S.cm⁻¹ avec un taux de conversion de 55 %.

Exemple 9

Comme réacteur, on utilise un ballon de 3 l à 5 cols, munis, respectivement, d'un robinet à 3 voies, d'un thermomètre, d'un septum permettant de planter des aiguilles reliées à des pompes doseuses et d'un agitateur.

Ce ballon équipé d'un agitateur est placé dans un bain thermostatique et est purgé par un cycle de 3 vides et 2 rinçages à l'azote pur et sec.

Dans ce ballon maintenu à 5° C sous azote, on introduit ensuite 750 ml de chloroforme préalablement dégazé à l'azote, puis sous agitation on ajoute 561 g de chlorure ferrique anhydre.

Ensuite, on remplit sous azote un récipient de 500 ml avec 250 ml de chloroforme et 69 g de 3-n-octylthiophène distillé et dégazé.

On introduit en parallèle à l'aide des pompes doseuses dans le ballon 120 ml d'eau en 5 minutes et le chloroforme et le 3-n-octylthiophène, contenus dans le récipient, en 10 minutes.

Le ballon est ensuite encore maintenu sous agitation à 5° C pendant deux heures, après quoi on introduit 1 l d'acétonitrile très lentement durant 80 minutes dans ce ballon maintenu à 5° C.

Le produit est ensuite filtré à 20° C sous azote.

Le produit obtenu est lavé 5 fois avec 500 ml d'acétonitrile à 20° C, puis séché sous vide dynamique à 20° C.

On obtient finalement 75 g de poly(3-n-octylthiophène) dopé qui présente une conductivité de 30 S.cm⁻¹ et avec un taux de conversion :

$$\left[\frac{\text{polymère (poly)octylthiophène calculé comme non dopé}}{\text{monomère 3-n-octylthiophène}}\right] \text{ de 80 \%.}$$

**Revendications**

1 - Procédé pour la préparation de polymères conducteurs d'électricité dérivés de 3-alkylthiophènes, caractérisé en ce que le 3-alkylthiophène est polymérisé par voie chimique dans un milieu réactionnel comprenant un sel ferrique, un halogénure d'alkyle et de l'eau.

2 - Procédé selon la revendication 1, caractérisé en ce que le rapport molaire entre l'eau et le sel ferrique est compris entre 0,01 et 6.

3 - Procédé selon la revendication 1 ou 2, caractérisé en ce que l'halogénure d'alkyle mis en oeuvre est le chloroforme ou le chlorure de méthylène.

4 - Procédé selon la revendication 1, 2 ou 3, caractérisé en ce que le sel ferrique mis en oeuvre est le chlorure ferrique.

5 - Procédé selon l'une quelconque des revendications précédentes, caractérisé en ce que le rapport molaire entre le sel ferrique et le 3-alkylthiophène est compris entre 1 et 25.

6 - Procédé selon l'une quelconque des revendications précédentes, caractérisé en ce que la quantité d'halogénure d'alkyle mis en oeuvre est comprise entre 0,001 et 1 litre par g de 3-alkylthiophène mis en oeuvre.

7 - Procédé selon l'une quelconque des revendications précédentes, caractérisé en ce que la quantité d'eau mise en oeuvre est comprise entre 0,002 et 900 % en poids d'halogénure d'alkyle.

8 - Procédé selon l'une quelconque des revendications précédentes, caractérisé en ce que la température est comprise entre 0° et 15° C.

9 - Procédé selon l'une quelconque des revendications 1 à 8, caractérisé en ce que le polymère obtenu est mélangé avec un polymère thermoplastique, tel que le chlorure de polyvinyle, le polyéthylène ou le copolymère d'éthylène et d'acétate de vinyle, et que le mélange ainsi obtenu est malaxé et pressé à chaud.

10 - Procédé selon l'une quelconque des revendications précédentes caractérisé en ce que l'on met en oeuvre comme 3-alkylthiophène le 3-n-octylthiophène.

11 - Dispositifs électroconducteurs comprenant un polymère obtenu selon l'une quelconque des revendications 1 à 10.

12 - Dispositifs électroconducteurs selon la revendication 11, caractérisés en ce qu'ils comprennent un ou plusieurs polymères thermoplastiques tel que le chlorure de polyvinyle, le polyéthylène ou le copolymère d'éthylène et d'acétate de vinyle.

Office européen
des brevets

**RAPPORT DE RECHERCHE EUROPEENNE**

Numero de la demande

EP 90 20 0292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 253 594 (COOKSON GROUP PLC)<br>* Page 5, lignes 41-53; page 6, lignes 1-5 *<br>--- | 1 | C 08 G 61/12<br>C 08 L 65/00 //<br>(C 08 L 65/00<br>C 08 L 27:06 )<br>(C 08 L 65/00<br>C 08 L 23:04 ) |
| Y | JAPANESE JOURNAL OF APPLIED PHYSICS/PART 2: LETTERS, vol. 26, no. 6, juin 1987, pages L1038-L1039, Toyko, JP; K. YOSHINO et al.: "Fusibility of polythiophene derivatives with substituted long alkyl chain and their properties"<br>* En entier *<br>--- | 1 | |
| Y | CHEMICAL ABSTRACTS, vol. 106, no. 12, 23 mars 1987, page 6, résumé no. 85145f, Columbus, Ohio, US; R. SUGIMOTO et al.: "Preparation of soluble polythiophene derivatives utilizing transition metal halides as catalysts and their property", & CHEM. EXPRESS 1986, 1(11), 635-8<br>* Résumé *<br>--- | 1 | |
| Y | CHEMICAL PATENTS INDEX, BASIC ABSTRACTS JOURNAL, semaine 8742, 16 décembre 1987, résumé no. AN-87-296490, section A: PLASDOC, Derwent Publications Ltd, Londres, GB; & JP-A-62 209 130 (KOMATSU K.K.) 11-03-1986<br>* Résumé *<br>----- | 1 | **DOMAINES TECHNIQUES RECHERCHES (Int. Cl.5)**<br><br>C 08 G |

Le présent rapport a été établi pour toutes les revendications

| Lieu de la recherche | Date d'achèvement de la recherche | Examinateur |
|---|---|---|
| LA HAYE | 20-06-1990 | STIENON P.M.E. |